# EUROPEAN PATENT APPLICATION

(11) **EP 0 775 954 A1**
(43) Date of publication of application: **28.05.1997**
(21) Application number: 96202964.1
(22) Date of filing: 24.10.1996
(51) Int. Cl.: G05D 23/13

(54) **Thermostatic mixing tap**

(30) Priority: 08.11.1995 DE 19541505
(71) Applicant: Danfoss A/S, 6430 Nordborg (DK)
(72) Inventor: Mattsson, Lars, 582 58 Linköping (SE); Ingvarsson, Leif, 582 58 Linköping (SE)

(57) **Abstract**

A thermostatic mixing tap (1) is disclosed, having a housing (2), a cold water connection (3), a hot water connection (4) and a valve element (7) coupled to a thermostatic working element (11), which valve element together with a cold water valve seat (9) forms a cold water valve and together with a hot water valve seat (8) forms a hot water valve.

In such a mixing tap it is desirable for the comfort of the user to be increased. In particular, when adjusting the desired temperature value it is desirable to avoid temperature peaks in the water that is delivered.

For that purpose, a by-pass path (22, 25) is provided parallel to the cold water valve (7, 9).

## Description

The invention relates to a thermostatic mixing tap having a housing, a cold water connection, a hot water connection and a valve element coupled to a thermostatic working element, which valve element together with a cold water valve seat forms a cold water valve and together with a hot water valve seat forms a hot water valve.

Such a thermostatic mixing tap is known, for example, from DE 35 00 461 C1. The valve element, which generally can also be constructed in two parts in order to produce a separate shut-off facility for the cold water valve and the hot water valve, is adjusted by the thermostatic working element, which is exposed to the temperature of the water being discharged and thus mixed. For that purpose the water being discharged is mixed in a mixing chamber in which also the thermostatic working element is arranged. In the known case that element works by changing its length in dependence on temperature. If the water in the mixing chamber is too hot, the hot water valve is closed further and the cold water valve is opened further. If the water in the mixing chamber is too cold, the mixing tap operates in the reverse direction.

It has now been observed that in such mixing taps, when adjusting the desired value towards a higher temperature, the water in the mixing chamber initially becomes disagreeably hot, that is, until the thermostatic working element, which operates with a certain delay, has set the correct setting of the valve element again. These temperature peaks are regarded as irksome, in particular in the case of showers or hand basins.

The invention is based on the problem of achieving a temperature adjustment that the user feels to be more comfortable.

In a thermostatic mixing tap of the kind mentioned in the introduction, that problem is solved by providing a by-pass path parallel to the cold water valve.

By that means, on adjusting the desired temperature value to a higher value, despite a certain delay time in the response of the thermostatic working element, it is always possible to achieve an admixture of cold water, which is able to flow via the by-pass path past the cold water valve into the mixing chamber. Admittedly, in this case also, temperature peaks cannot entirely be avoided, but because of the admixture of the cold water their extent is limited, so that the user no longer regards such variations in temperature as so disagreeable. Moreover, this construction has the advantage that, on adjusting the mixing tap to a very low desired temperature value, that is, to a cold water setting, there is a larger flow path available for the cold water. The cold water can in fact flow on the one hand through the then opened cold water valve and on the other hand additionally via the by-pass path. Using a relatively simple structural design and without additional control means it is possible to achieve with the mixing tap the option of being able to draw off cold water virtually at the same temperature as it is in the cold water connection. If, on the other hand, the temperature is increased, although the cold water valve is briefly closed the admixture of cold water is maintained, so that the user is protected from disagreeable temperature peaks even when the thermostatic working element closes the cold water valve and opens the hot water valve completely.

The by-pass path is preferably formed by a gap in a sealing face between valve element and cold water valve seat. This is a very simple yet effective construction. Even when the valve element is moved into its closed position, an opening remains between the valve element and valve seat.

An alternative or additional construction can provide for the by-pass path to be in the form of a channel in the housing or in the valve element. Here, it is possible optionally to use different flow cross-sections.

In another especially preferred construction, provision is made for a shut-off device to be arranged between the by-pass path and a mixing chamber. In some cases it is desirable for the mixing tap to deliver very hot water, that is, water at the temperature from the hot water connection without admixture of cold water from the cold water connection. Such a setting is especially relevant when the water temperature in the hot water connection is low, for example, because the hot water connection is fed by a low-temperature heating system. Because the cold water supply can now be shut off, it is possible to obtain hot water at the desired temperature. Shutting off or closure of the by-pass path presupposes an additional manipulation, however, so that the high temperature peaks when simply adjusting the temperature to a higher desired value are not observed.

In that case it is an advantage if the shut-off device is precluded from actuation by the thermostatic working element. The thermostatic working element cannot therefore actuate the shut-off device, so that the temperature peaks that occur as a result of the delay in the response of the thermostatic working element are avoided. The shut-off device can be operated only from the outside.

The shut-off device is preferably connected to a set-point adjusting device. The set-point adjusting device is operated by the user when he wishes to change the temperature. Such a temperature adjustment is also needed, however, when it is desired to draw off hot water. By that means, relatively few operating elements need to be led to the outside.

The shut-off device is preferably effective when the set-point adjusting device is located in its maximum value position. The user does not therefore even need to be aware of the internal construction of the mixing tap. Provided that he increases the temperature within certain limits, cold water is constantly admixed so that the disagreeable temperature peaks are avoided. If he wishes to draw off very hot water, however, he will bring the set-point adjusting device to its maximum value. Although that prevents the inflow of cold water, the user is aware that he can expect very hot water at that setting, so that his comfort is not affected thereby.

The shut-off device preferably comprises a sleeve with a circumferential, radially projecting projection which is arranged to be brought into engagement with a circumferential stop member on the valve element. By that means, on the one hand a relatively large flow cross-section is available when the cold water valve is opened or the by-pass path is open but, on the other hand, this flow path is also reliably closed when the projection has engaged with the stop member.

It is also preferred for the sleeve to form an abutment for the thermostatic working element. In this manner a relatively simple coupling for the maximum value adjustment of the temperature can be achieved. On the one hand the sleeve, which forms the abutment for the thermostatic working element, moves into its position in which the thermostatic working element moves the valve element so that the hot water valve is as wide open as possible. Any increase in length of the thermostatic working element remains harmless, because the sleeve has been brought precisely into the most furthest removed position in which, for want of an abutment, increases in the length of the working element can no longer lead to displacement of the valve element. On the other hand, also by the same movement of the sleeve the projection is brought into engagement with the stop member, so that supply of cold water is reliably prevented.

In the construction of the by-pass path with a channel, the shut-off device preferably has a sealing device covering a mouth of the channel. To close the by-pass path this sealing device is simply moved over the mouth, so that no water is able to leave the mouth or enter the mouth. It is possible also in this manner to close the by-pass path very quickly and reliably by simple means.

The shut-off device is preferably in the form of a disc. The sealing device therefore remains independent of the rotated position, which is especially advantageous when the sealing device, as mentioned above, is connected to the set-point adjusting device which in many cases adjusts the set-point by a rotary movement.

The disc is preferably axially movable and covers the mouth with its circumferential surface. The disc can then be of rotationally symmetrical construction. Forces that are exerted on the disc by the water pressure at the mouth of the channel can then be compensated for without difficulty. There is virtually no need to fear deformation of the disc.

The disc preferably has through-openings. The disc can therefore be arranged between the mouth of the channel and the mixing chamber. Until the disc covers the mouth with its circumference, the cold water is able to flow through the through-openings. When the disc covers the channel, the through-openings do lose their effect, because there is no water left to flow through. But that causes no harm.

The cold water connection advantageously opens out into an annular groove and the by-pass path is arranged in the region of the opening of the cold water connection into the annular groove. The cold water is therefore available at the by-pass path at virtually greatest pressure. That ensures that the necessary amount of cold water can always be admixed.

The invention is described hereinafter with reference to preferred embodiments in conjunction with the drawings, in which
- Fig. 1: shows a first construction of a mixing tap in a mode for feeding cold water,
- Fig. 2: shows the mixing tap in a mode for the admixture of cold water to hot water by way of a by-pass path,
- Fig. 3: shows the mixing tap according to Fig. 1 or 2 in a mode only for hot water,
- Fig. 4: shows another construction of a mixing tap in a mode corresponding to Fig. 1,
- Fig. 5: shows the other construction of a mixing tap in a mode similar to that of Fig. 2, and
- Fig. 6: shows the other construction of a mixing tap in a mode according to Fig. 3.

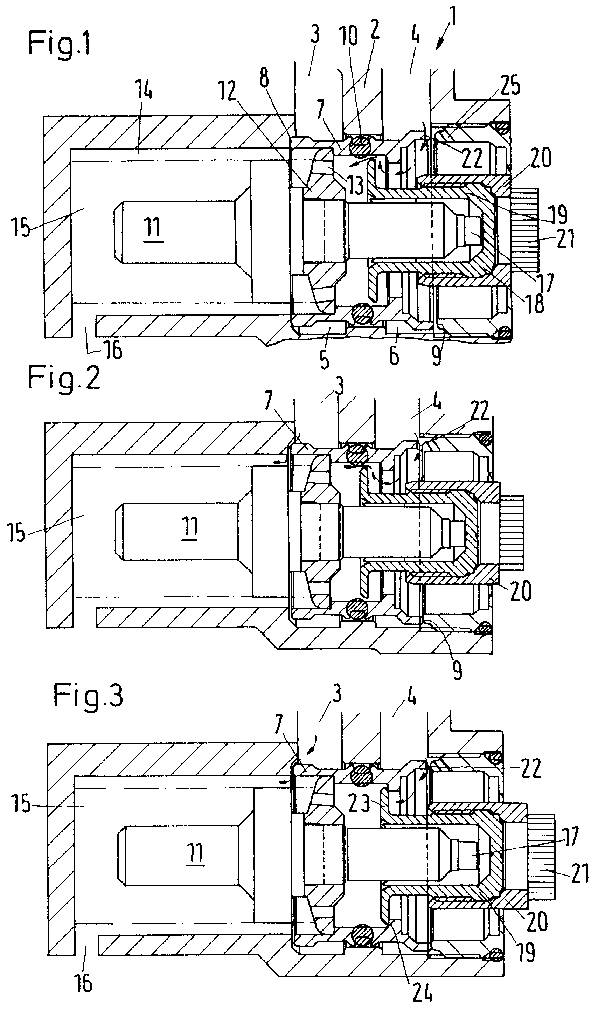

Figs 1 to 6 illustrate a mixing tap, in each case merely diagrammatically in section. Identical parts have been provided with identical reference numbers.

The mixing tap 1 shown in Figs 1 to 3 has a hot water connection 3 and a cold water connection 4 in a housing 2. The hot water connection 3 opens into an annular groove 5 and the cold water connection opens into an annular groove 6, both grooves being in the housing 2.

Between the two annular grooves 5, 6, and at least partly covering them, there is a valve element 7 in the form of a slide member which for the hot water connection 3 co-operates with a hot water valve seat 8 and for the cold water connection co-operates with a cold water valve seat 9. The two valve seats 8, 9 are in the form of projections formed circumferentially at right angles to the direction of movement of the valve element 7.

The valve element 7 is sealed with respect to the housing 2 by a diagrammatically illustrated seal 10.

The valve element 7 is actuated by a thermostatic working element 11, which is in the form, for example, of a wax cartridge. The working element 11 in that case acts by way of fingers 12 on the valve element 7, which fingers either project radially outwards in a star shape or have bores 13. In addition, the valve element 7 is also biassed by a spring 14, which pushes the valve element 7 in a direction in which the hot water connection 3 is unblocked and the cold water connection 4 is closed.

In the housing 2 there is a mixing chamber 15 with an outlet 16. The front end wall of the mixing chamber 15 forms the abutment for the spring 14.

The end 17 of the working element 11 remote from the mixing chamber lies, in the position illustrated in Fig. 1, against a closed end 18 of a sleeve 19, which can be adjusted in an axial direction by means of a set-point adjusting device 20. The set-point adjusting device is adjustable, for example, by means of a rotary knob 21. When the rotary knob 21 is turned, the set-point adjusting device 20 is displaced axially, that is, in Fig. 1 to the left or to the right with respect to the housing.

When the set-point adjusting device 20 is displaced to the left, the stop member for the end 17 of the working element 11 is also displaced to the left, so that the valve element 7, which can optionally be constructed to be biassed to the left by a spring, is also displaced to the left. Even small increases in length of the working element 11 through supply of heat in the mixing chamber 15 are sufficient to displace the fingers 12, and thus the valve element 7, further to the left, in order to block the hot water connection 3 and open the cold water connection 4 wider. When the set-point adjusting device 20 is displaced to the right, however, the conditions are reversed. Then, a larger region of the hot water connection 3 and a smaller region of the cold water connection 4 are unblocked.

In Figs 1 to 3 one can see that the valve element 7 has a recess 22 in the region of the end that co-operates with the cold water valve seat 9. The recess can, of course, also be formed by a gap in the valve seat 9. As is clear from Fig. 2, this recess also forms a path for the cold water from the cold water connection 4 into the mixing chamber 15 when the valve element 7 has been displaced to the right to bear against the cold water valve seat 9. That position of the valve element 7 is illustrated in Fig. 2. Without the recess 22, all that would happen is that hot water would come out of the hot water connection 3 into the mixing chamber 15. Such a situation arises, for example, when by means of the set-point adjusting device 20 an adjustment has been made starting from a lower temperature to a higher desired temperature. In that case the working element 11 is too short because of the lower temperature previously prevailing in the mixing chamber 15. On adjusting the set-point adjusting device 20, the valve element 7 is therefore displaced fully to the right (in Fig. 2) and therefore unblocks only the hot water connection 3, whilst the cold water connection 4 is fully blocked although that is not actually desired. Only after a certain time does the working element 11 lengthen again, as a result of the higher temperature then prevailing in the mixing chamber 15, to an extent that even the cold water connection 4 is unblocked a little.

The recess 22 now forms a by-pass path through which even in the case of such an adjustment cold water can flow subsequently into the mixing chamber 15, thereby avoiding disagreeable temperature peaks.

If, on the other hand the valve element 7 is moved by adjusting the set-point adjusting device 20 in such a way that it completely shuts off the hot water channel 3, a larger path, that is, a larger flow cross-section, is available for the flow of the cold water from the cold water connection 4 into the mixing chamber 15, so that with this construction cold water can be drawn from the outlet 16 at virtually the same temperature as the water from the cold water connection 4.

Occasionally it is also desirable to be able to draw off hot water from the hot water connection 3 at a temperature that corresponds to the temperature of the water in the hot water connection 3.

In that case it is not sufficient, as shown by Fig. 2, for the valve element 7 to be displaced fully to the right in order to block off the cold water connection, because cold water can still flow past the cold water valve 7, 9 through the recess 22. For that reason the sleeve 19 is provided with a circumferential projection 23 which can be brought into engagement with a similarly circumferential stop member 24 on the valve element 7. When the projection 23 rests against the stop member 24, the path for the cold water from the cold water connection 4 into the mixing chamber 15 is blocked.

In that position, the sleeve 19 is lifted away from the end 17 of the working element 11 to the necessary extent. In that case even an increase in length of the working element 11 as a result of an increased temperature in the mixing chamber 15 cannot lead to blocking of the hot water connection 3 again.

Conversely, blocking of the cold water connection 4 by means of the projection 23 and the stop member 24 in the setting shown in Fig. 1 and 2 cannot occur, because the blocking device comprising the sleeve 19 cannot be moved by the working element 11. On the contrary, the sleeve 19 is locked in the housing and can be moved only from the outside.

In order to achieve the setting that is illustrated in Fig. 3, the user must therefore deliberately displace the set-point adjusting device 20 by means of the rotary knob 21 so far that the projection 23 comes into engagement with the stop member 24. This presupposes a deliberate action, precluding the danger that the user's comfort will be adversely affected by disagreeable temperature peaks.

Apart from the recess 22, a channel 25 can also be provided in the housing 2 or in the valve element 7 (not illustrated), which channel likewise forms part of the by-pass path for the cold water valve 7, 9. The water that flows through this part of the by-pass path is also held back by the co-operation of projection 23 and stop member 24.

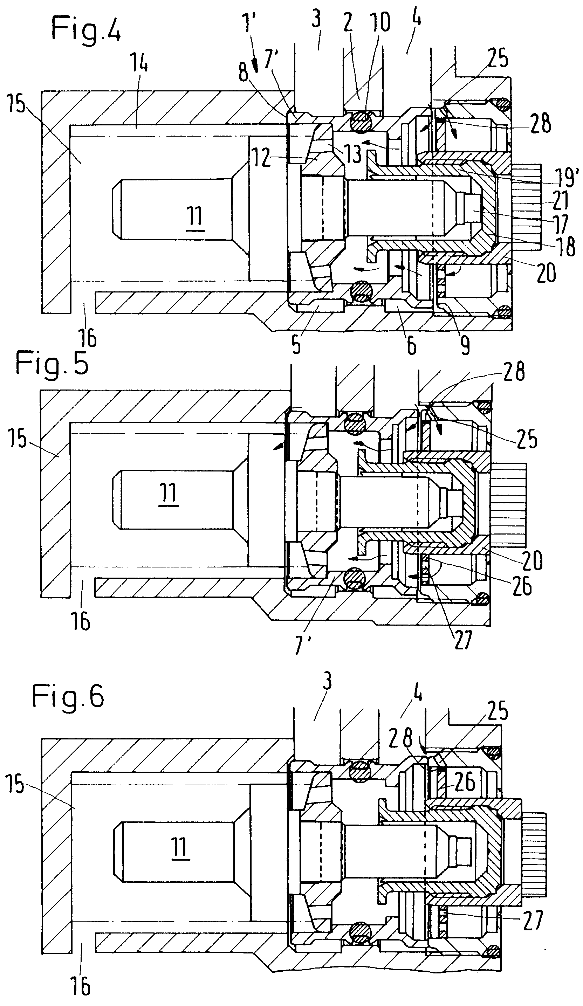

In the embodiment illustrated in Fig. 4 to 6, the construction of the by-pass path and the shut-off device has been modified. The latter now has a disc 26 that is arranged on the outside of the set-point adjusting device 20 and is axially displaceable jointly with that device; the disc 26 is provided with openings 27 and at its circumferential edge with sealing material 28. Furthermore, the valve element 7' has no recesses. Elements that have changed with respect to the construction according to Fig. 1 to 3 are provided with the same reference number, but with a prime.

The by-pass path for the cold water valve 7', 9 is in the present case therefore formed only by the channel 25. The water flowing through the channel 25 can pass through the openings 27 in the disc 26 to the mixing chamber 15.

When the delivery exclusively of hot water is desired, however, the set-point adjusting device 20 is displaced axially outwards to such an extent that the disc 26 covers, with the sealing material 28 at its edge, the mouth of the channel 25, and in this manner shuts off the by-pass path, as illustrated in Fig. 6.

Unlike the illustration of Fig. 2, in which the cold water valve 7, 9 is completely closed and delivery of cold water from the cold water connection 4 is effected only by way of the by-pass path 22, Fig. 5 shows a mode in which the valve element 7' unblocks both the cold water connection 4 and the hot water connection 3 a little way, in order to provide water having an intermediate temperature in the mixing chamber 15.

## Claims

1. Thermostatic mixing tap having a housing, a cold water connection, a hot water connection and a valve element coupled to a thermostatic working element, which valve element together with a cold water valve seat forms a cold water valve and together with a hot water valve seat forms a hot water valve, characterized in that a by-pass path (22, 25) is provided parallel to the cold water valve (7, 9; 7', 9).

2. Mixing tap according to claim 1, characterized in that the by-pass path (22) is formed by a gap in a sealing face between valve element (7) and cold water valve seat (9).

3. Mixing tap according to claim 1 or 2, characterized in that the by-pass path is in the form of a channel (25) in the housing (2) or in the valve element.

4. Mixing tap according to one of claims 1 to 3, characterized in that a shut-off device (23, 24; 26) is arranged between the by-pass path (22, 25) and a mixing chamber (15).

5. Mixing tap according to claim 4, characterized in that the shut-off device (23; 26) is precluded from actuation by the thermostatic working element (11).

6. Mixing tap according to claim 4 or 5, characterized in that the shut-off device (23; 26) is connected to a set-point adjusting device (20).

7. Mixing tap according to claim 6, characterized in that the shut-off device (23; 26) is effective when the set-point adjusting device (20) is located in its maximum value position.

8. Mixing tap according to one of claims 4 to 7, characterized in that the shut-off device (23) comprises a sleeve (19) having a circumferential, radially projecting projection which is arranged to be brought into engagement with a circumferential stop member (24) on the valve element (7).

9. Mixing tap according to claim 8, characterized in that the sleeve (19) forms an abutment for the thermostatic working element (11).

10. Mixing tap according to one of claims 4 to 9, characterized in that the shut-off device (26) has a sealing device covering a mouth of the channel (25).

11. Mixing tap according to claim 10, characterized in that the shut-off device (26) is in the form of a disc.

12. Mixing tap according to claim 11, characterized in that the disc is axially movable and covers the mouth with its circumferential surface (28).

13. Mixing tap according to claim 11 or 12, characterized in that the disc has through-openings (27).

14. Mixing tap according to one of claims 1 to 13, characterized in that the cold water connection (4) opens out into an annular groove (6) and the by-pass path (22, 25) is arranged in the region of the opening of the cold water connection (4) into the annular groove (6).
